# EUROPEAN PATENT APPLICATION

(11) **EP 1 964 822 A1**
(43) Date of publication of application: **03.09.2008**
(21) Application number: 07381011.1
(22) Date of filing: 27.02.2007
(51) Int. Cl.: C03C 23/00

(54) **Method for manufacturing decorated glass and glass thus obtained**

(71) Applicant: CRISTALES CURVADOS S.A., E-08400 Granollers, Barcelona (ES)
(72) Inventor: Figuerola Servitje, Ferran, 08400 Granollers (ES)
(74) Representative: Esteban Perez-Serrano, Maria Isabel

(57) **Abstract**

The present invention refers to a method for manufacturing decorated glass and the glass obtained through this method. The manufacturing method which is the subject of this invention is characterised in that it makes a series of micro-fissures in the glass interior which are sufficiently close together to visually define a plane, subsequently repeating the process forming other planes with similar characteristics. In this way the effect is achieved that when viewing the glass through a perspective parallel to the planes, it is possible to see through the glass, however, when viewing the glass from a perspective which forms an angle with the aforementioned planes, these interrupt vision through the glass. Decorated glass according to the previously described method is also the subject of the present invention, that is, it comprises a series of interior planes which form an angle with the external faces of the glass so that, based on the position of the glass, these planes allow or prevent vision through said glass.

## Description

### BACKGROUND TO THE INVENTION

The present invention refers to a method for manufacturing decorated glass and the glass obtained through this method.

The manufacturing method which is the subject of this invention is characterised in that it makes a series of micro-fissures in the glass interior which are sufficiently close together to visually define a plane, subsequently repeating the process to form other planes with similar characteristics. In this way an effect is created such that when the glass is viewed from a perspective parallel to the planes it will be possible to see through the glass, however when viewing the glass from a perspective forming an angle with the aforementioned planes, these interrupt vision through it.

The subject of the present invention is also decorated glass according to the aforementioned method, that is, it comprises a series of interior planes which form an angle with the external faces of the glass so that, based on the position of the glass, these planes allow or prevent vision through said glass.

### BACKGROUND TO THE INVENTION

Types of glass are known comprising layers in their interior which are situated transversally to the external walls.

These layers may, for example, be made from plastic materials embedded in the body of the glass. This permits an optical effect which, when viewing the glass in line with the aforementioned plane, it is possible to see through it, as these are reduced to lines and, however, on changing the perspective of the glass and viewing at an angle in respect of the aforementioned planes, and on the basis of their proximity, vision of the other side of the glass is interrupted.

The present invention proposes a method by which the use of layers inserted in the glass is avoided, thus facilitating the manufacturing process and considerably increasing the possibilities of the form taken by these planes. The proposed method provides speed, cost saving and accuracy in manufacture, thus achieving a type of glass whose structural properties are in no way affected.

### DESCRIPTION OF THE INVENTION

The present invention refers to a method for manufacturing decorated glass as well as the glass obtained through this method.

The manufacturing method which is the subject of this invention is characterised in that a series of microfissures are made in the interior of the glass. These microfissures form opaque marks which may be made at any depth in respect of the external faces of the glass. Since the microfissures are sufficiently close together they can form a plane which makes it impossible to see through the glass. By repeating this process in different layers of the glass, various planes are formed with the same characteristic, that is, comprising microfissures. The planes are situated in such a way that when viewing the glass transversally to the planes, they permit vision to the other side of the glass, however when changing the point of view, forming an angle with the planes, these prevent vision, either partially or totally, to the other side of the glass.

The subject of the present invention is also the glass obtained by means of the previously described method which possesses the functional qualities enumerated of making it impossible to see through, according to the viewing perspectives adopted with respect to the glass planes.

### DESCRIPTION OF THE DRAWINGS

The present descriptive report is supplemented by a series of drawings illustrative of a preferred embodiment but not, however, restricting the invention in any way.

Figure 1 shows a perspective diagram of the glass which is the subject of the invention.

Figure 2 shows a diagram in elevation of the glass which is the subject of the invention.

### PREFERRED EMBODIMENT OF THE INVENTION

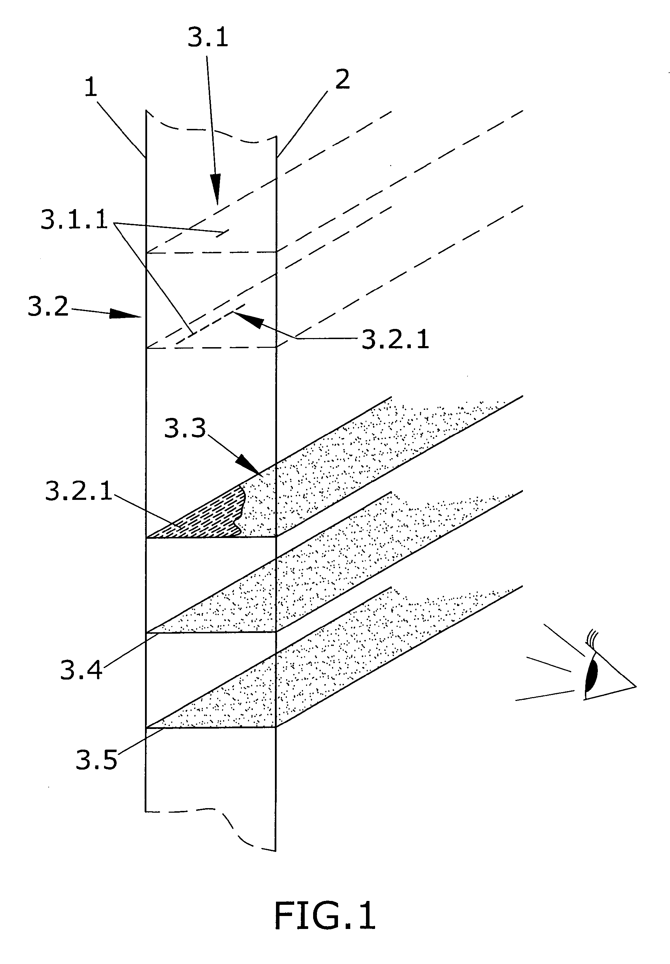

Figure 1 shows a perspective diagram of the glass which is the subject of the invention. The glass comprises two external faces (1, 2) in which various differentiated planes (3) are represented. In order to facilitate comprehension of the invention, the preferred embodiment shown in figure 1 includes planes (3) parallel to each other and perpendicular to the external faces (1, 2) of the glass.

Any other form adopted by the aforementioned (3) planes is also the subject of the invention, that is, they might not be parallel to each other, and they might not be essentially perpendicular to the external walls (1, 2)and forming a sharp and obtuse angle with same. In any case, the method of manufacture would be the same as would the optical effect achieved by the planes.

In order to illustrate the manufacturing method, in the upper plane (3.1) a microfissure (3.1.1) is shown which is situated at a certain distance from one of the external faces (1, .2). This upper plane (3.1) is fictitious and has been represented with a discontinuous line in order to facilitate location of the aforementioned micro-fissure (3.1.1). Around this micro-fissure (3.1.1.) others will be made (3.1.1) so that finally a plane (3) will be created formed by micro-fissures (3.1.1) which block vision through the glass.

In the preferred embodiment the group of micro-fissures (3.1.1.) is made in the following way:
- stage 1 in which a micro-fissure (3.1.1) is made in the glass interior. This stage would be represented in the plane (3.1) illustrated in figure 1.
- Stage 2 in which the micro-fissures (3.1.1.) are made subsequent to the previous one (3.1.1.) so that they form a line (3.2.1.) This stage is represented in one of the planes (3.2) of figure 1, in order to better illustrate it. When viewing the glass at this stage it is possible to distinguish a continuous line (3.2.1).
- Stage 3 in which other lines (3.2.1) are subsequently made in the same way as the previous ones and close to each other, to form a plane (3) which blocks vision through it. This situation is represented in one of the planes (3.3) illustrated in figure 1.

In the preferred embodiment, the planes (3) are formed by the connection of the lines (3.2.1) in this case parallel to each other. The fact that the lines (3.2.1) may be straight or curved or may not even be parallel to each other is also the subject of this invention.

Two other lower planes (3.4, 3.5) have been situated. In this case the planes (3.4, 3.5) do not actually touch the external faces (1, 2) of the glass contrary to the upper plane (3.3) which extends to the outlines of the glass. In this preferred embodiment the planes (3.3, 3.4, 3.5) are parallel to each other, although other embodiments would be possible.

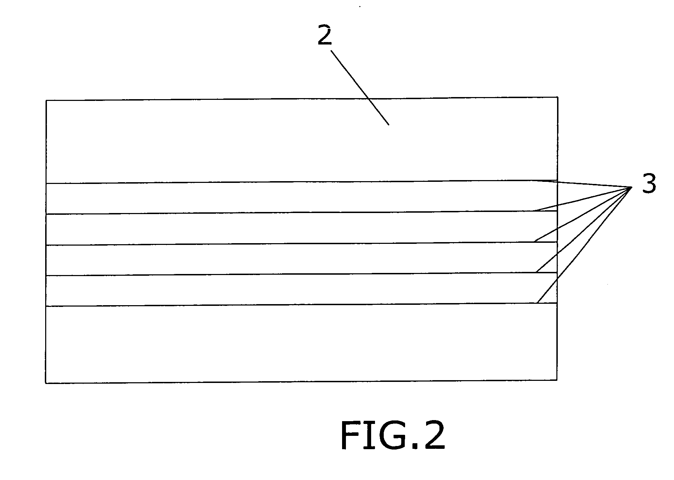

By observing the glass illustrated in figure 1, if we were to look essentially transversally through it we would be able to see through the glass. This situation has been illustrated in figure 2, in which the glass is shown in elevation with the planes (3) appearing transversally, and therefore they allow viewing of what exists on the other side of the glass since the planes (3) are reduced to a line.

Nevertheless, at the moment in which the angle of vision of the glass is changed and the extreme faces (1, 2) cannot be seen transversally, the planes (3) will interrupt vision through the glass. This vision shall be interrupted to a greater or lesser degree based on the distance between consecutive planes (3).

The micro-fissures (3.1.1) may be made using laser or any other type of medium able to create them.

The fissure lines (3.2.1) may be lines with any desired design, and by playing with that design it will be possible to give greater or less vision to zones in the same glass, or even to define specific forms. As occurs with the planes (3), since based on whether or not they are parallel, we are able to provide a greater or lesser vision to various areas of the glass.

## Claims

1. Method for manufacturing decorated glass, **characterised in that** a series of micro-fissures are made (3.1.1) in the interior of the glass situated in such a way that they define a plane(3) which blocks the vision through it, subsequently repeating the process forming other planes(3) in such a way that it is possible to block vision through the glass based on the perspective in respect of the planes (3)

2. Method for manufacturing decorated glass according to claim 1, **characterised in that** the definition of the plane (3) comprises at least the following stages:
• Stage 1 in which a micro-fissure (3.1.1) is made in the glass interior.
• Stage 2 in which the micro-fissures (3.1.1.) are made subsequent to the previous one (3.1.1.) so that they form a line (3.2.1.)
• Stage 3 in which other lines (3.2.1) are subsequently made in the same way as the previous ones and close to each other, to form a plane (3) which blocks vision through the glass.

3. Method for manufacturing decorated glass according to claim 2, **characterised in that** the lines (3.2.1) are straight.

4. Method for manufacturing decorated glass according to claim 2, **characterised in that** the lines (3.2.1) are curved.

5. Method for manufacturing decorated glass according to claim 1, **characterised in that** the micro-fissures (3.1.1) are made by laser.

6. Method for manufacturing decorated glass according to claim 1, **characterised in that** the planes (3) are perpendicular to the superficial faces (1, 2) of the glass.

7. Method for manufacturing decorated glass according to claim 1, **characterised in that** the planes (3) form an acute or obtuse angle with the superficial faces (1, 2) of the glass.

8. Decorated glass according to the method in claim 1, **characterised in that** it comprises a series of planes (3) which form an angle with the surface of the glass (1, 2) in such a way that, based on the position of the glass, these planes allow or prevent vision through said glass.
